# EUROPEAN PATENT SPECIFICATION

(11) **EP 0 617 672 B1**
(45) Date of publication and mention of the grant of the patent: **12.03.1997**
(21) Application number: 93901450.2
(22) Date of filing: 08.12.1992
(51) Int. Cl.: B60K 15/063

(54) **FUEL TANK ARRANGEMENT FOR MOTOR VEHICLES**
ANORDNUNG EINES KRAFTSTOFFTANKS FÜR KRAFTFAHRZEUGE
RESERVOIR D'ESSENCE POUR VEHICULES AUTOMOBILES

(30) Priority: 23.12.1991 SE 9103818
(43) Date of publication of application: 05.10.1994
(73) Proprietor: SCANIA CV AKTIEBOLAG, S-151 87 Södertälje (SE)
(72) Inventor: GRÖNLUND, Mats, S-126 36 Hägersten (SE); AMREN, Jonas, S-151 47 Södertälje (SE)
(86) International application number: SE9200845
(87) International publication number: WO9312946

(56) References cited:
- EP-A- 172 315
- US-A- 4 411 441

## Description

This invention relates to a fuel tank arrangement for motor vehicles of the type indicated in the preamble to patent claim 1

### State of the art

Authorities, customers and truck manufacturers have requirements and impose demands on the truck and its fuel tanks. The customers want to be able to select a suitable tank volume themselves, taking into consideration their transport tasks, and often require a larger fuel space than can be installed on today's trucks. The truck manufacturers have difficulty in meeting the requirements of the customers because the space available for fuel tanks is limited because of legal requirements specifying the maximum permissible vehicle width, because the manufacturer must build his vehicle so that its different components are accessible during assembly and service, and so that additional equipment can be installed, such as a loading platform, cabinet or the like, and so that the vehicle has sufficient ground clearance. The problem of space is intrinsically minor on vehicles with a long wheelbase, but is serious and troublesome on vehicles with a short wheelbase because available tank space is located along the outside of the vehicle frame, between the wheel axles. Despite the fact that the problem is only encountered in vehicles with a short wheelbase it is still a major problem. For not only is the vehicle width limited by legal requirements, but the total length of a vehicle combination is also limited. This means that in order to obtain space for as much load as possible within the statutory length the truck owners often use towing vehicles with a short wheelbase to which they couple a trailer with as long a load length as possible. Since towing vehicle combinations are very common and are often used for long-distance transport the customer demand for a large tank volume is highest for these vehicle combinations.

For reasons of comfort it is also common for vehicles to be equipped with pneumatic suspension. This exacerbates the space problems mentioned because the pneumatic spring systems require special air reservoirs which, because of their size, must also be mounted along the outside of the vehicle frame, between the wheel axles, and therefore encroach upon the available tank space.

Vehicle batteries etc. may also be mounted on the frame and encroach upon the available space.

In practice, therefore, the truck manufacturer has only a specific amount of space at his disposal for installing the fuel tank. The space has a given length, a given width and a given height. The length is limited, as already mentioned, by the wheelbase of the vehicle because the fuel tanks are only allowed to extend along the frame side member between the front wheels and front rear wheels. The width is limited outwardly by the fact that legal requirements state that the maximum vehicle width cannot be an arbitrary value, and inwardly by the fact that the fuel tank is not allowed to extend within the inner edge of the frame side member, as this would further limit the possibilities of rational production and service. The height is limited in the upward direction by the fact that the highest point of the fuel tank is not allowed to be higher than the upper edge of the frame side member, otherwise it is difficult to fit additional equipment to the vehicle, and in the downward direction by the requirement for adequate ground clearance.

A commonly occurring tank for heavy vehicles, e.g. trucks, is manufactured from sheet steel or plastic. As shown in Figure the tank rests on a number of J-shaped brackets 100 which are screwed into the frame side member 2 and is kept in position with strap 101, which extends from the top of bracket 100 to its lower outer part. To obtain the highest possible fuel volume it is not uncommon to install two tanks one behind the other on one and the same frame side member. The fuel tanks are then installed so that the ends rub against each other when the vehicle sways. The truck manufacturers use a number of relatively large standard tanks which are fitted to all vehicles regardless of wheelbase, which means that the available length for fuel tanks between the wheel axles can seldom be effectively used.

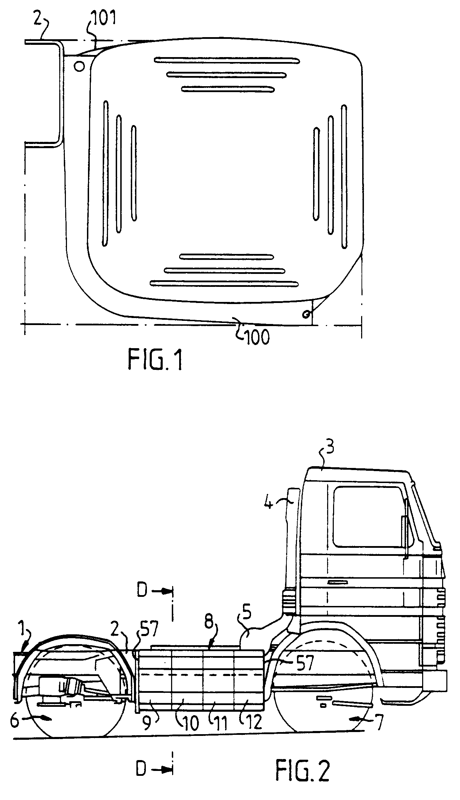

The fuel tank in Figure 1 has an essentially square cross-section, but tanks with a circular or rectangular cross-section are not uncommon. The brackets in known solutions are manufactured from pressed sheet steel and extent into and reduce the volume of the cross-sectional space which could be available for fuel. To indicate how poorly the cross-sectional space available for fuel is used in known solutions, the parts of the total available cross-sectional space which is not used for fuel are demarcated in Figure by dot-dashed contours.

Summing up, there is a space on the vehicle which is available for the installation of a fuel tank. However, the space is not used effectively on known vehicles either in terms of the available length or in terms of the available cross-section of the space.

### Object of the invention

The primary object of the invention is to indicate a solution in which the space mentioned is used as effectively as possible, and in which the customer is able to compose a tank volume which is suitable for him. The object is achieved according to the invention in that the fuel tank arrangement exhibits the features indicated in the characteristic parts of claims 1 respectively. In the independent claims characteristics are indicated for further development of the fuel tank arrangement according to claim 1

The invention is based on a modular system in which the available fuel space is formed by a number of relatively small tanks which can be connected to each other, and in which the total size of the fuel space can be varied by appropriate selection of the number of tanks. The tanks are connected to each other and to the vehicle frame by suspension mechanisms on the end of each tank. Each suspension mechanism is designed with at least one supporting face which, as a result of displacement towards the tank, interacts with the corresponding supporting face at the end of the respective tank. In order to ensure that the supporting surfaces interact with each other in the case of a disadvantageous embodiment, in all operating conditions of the vehicle, at least one fastening mechanism extends between the suspension mechanisms. In this case the fastening mechanism presses the supporting faces against each other.

The banks can be likened to building blocks which can be connected to each other with intervening suspension mechanisms. A suspension mechanism between two tanks can be made relatively thin, and because the supporting faces interact, and extend into each other, so to speak, it is possible to fit the ends of two tanks tightly together. With this modular system it is therefore possible to fill the entire available length between the wheel axles with tanks which are positioned so close together that they form a fuel tank package which, to an observer, appears to be one single elongated fuel tank. If the customer desires a smaller available fuel volume it is very simple to dismantle the tanks not required, leaving behind the remaining tanks. It is also an easy matter for a customer with a small tank volume to increase this volume if the transport conditions change. Because the respective tanks are suspended by suspension mechanisms at their ends, the available cross-section is also used because the brackets which are shown in Figure 1 and which reduce the volume are avoided.

By using the fuel tank arrangement according to the invention a flexible system is therefore obtained which is also simple and rational to assemble, and where the available fuel space can be used as effectively as possible, and where the customer can compose a tank volume suitable for him.

Other features characterising the invention are indicated in the attached claims and by the following description of an embodiment exemplifying the invention. The description is given with reference to the attached drawings.

### Brief description of the drawings

- Figure 1: shows a transverse view of a known fuel tank arrangement,
- Figure 2: shows a vehicle with a fuel tank arrangement according to the invention,
- Figure 3: shows a perspective view essentially along D-D in Figure 2,
- Figure 4: shows a perspective view of a tank included in the fuel tank arrangement according to the invention,
- Figure 5: shows a cross-section along A-A in Figure 6,
- Figure 6: shows a perspective view of an unmounted fuel tank arrangement according to the invention,
- Figure 7: shows a transverse view viewed from the frame of a tank according to the invention, with suspension mechanisms,
- Figure 8: shows an elevation of a fastening arrangement for suspension mechanisms,
- Figure 9: shows a cross-section essentially along B-B in Figure 3 in a position between two fuel tanks along D-D in Figure 2, and
- Figure 10: shows a cross-section essentially along C-C in Figure 3 in a position between two fuel tanks along D-D in Figure 3.

### Description of embodiment

Figure 2 shows a vehicle chassis. The chassis incorporates a frame 1 which consists of two continuous parallel side members which are connected to each other by a number of cross members, not shown. The figure shows the chassis from the side, which is why only one side member 2 is visible. A cab 3 is arranged on the front section of frame 1. An air inlet pipe 4, connected to an air cleaner 5, is secured to cab 3, and the cleaner is secured to frame 1 to clean the intake air to the drive unit of the vehicle, not shown. On certain vehicles air cleaner 5 is arranged above frame 1, whilst on other vehicles, as shown in the figure, it is arranged on the outside of frame 1 and encroaches upon a space for a fuel tank arrangement 8.

A rear axle 6 and a front axle 7 extends underneath the frame in the cross-sectional direction of frame 1. Between axles 6, 7 fuel tank arrangement 8 is arranged to extend longitudinally over the space between axles 6, 7. The fuel tank arrangement will in future be referred to fuel tank package 8.

Fuel tank package 8 is based on a modular system and consists of a number of tanks 9-12, which are combined with each other, the total size of the fuel space being varied by selecting the number of tanks 9-12.

In this embodiment each tank 9-12 is manufactured from plastic, e.g. by means of a blow moulding process, but preferably not necessarily from HD polyethylene. The respective tanks 9-12 have a small volume, compared with those normally used in trucks, and only have sufficient capacity for between 150 and 250 dm³ of fuel. In an advantageous embodiment each tank 9-12 contains approximately 200 dm³ of fuel.

By designing tanks 9-12 relatively small a flexible system is obtained in which no baffle plates are required in tanks 9-12. This simplifies the production of the tanks, making them cheaper.

From the point of view of standardisation it is advantageous for all tanks 9-12 to have the same shape and volume, but alternatively it is possible, for example, to design the front tank 12 with recesses and/or projecting sections, so that in this case it is allowed to extend below air cleaner 5 or around another chassis component. This makes it possible, on vehicles on which air cleaner 5 or another component is arranged on the outside of frame 1, to use the continuous space between axles 6,7 more effectively.

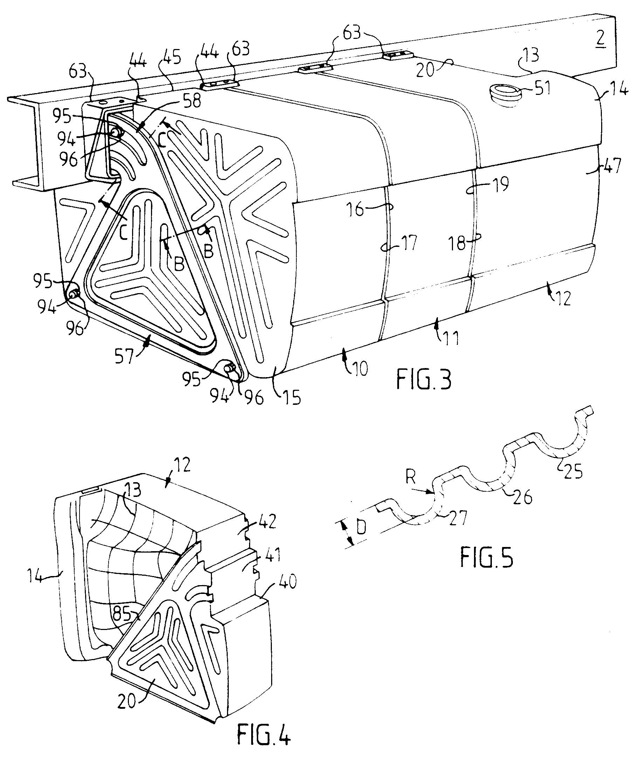

Figure 3, which is a perspective view of a fuel tank package along D-D in Figure 2, shows tanks 10, 11 without recesses and projective sections and a tank unit 12 with both recesses 13 and projecting sections 14. The latter tank 12 is also shown in Figure 4 in a perspective view seen obliquely from the front of the vehicle. Obviously it is possible to design recesses 13 and/or the projecting sections 14 in any tank 9-12 by a different method from that shown in the figures, without detracting from the concept of the invention.

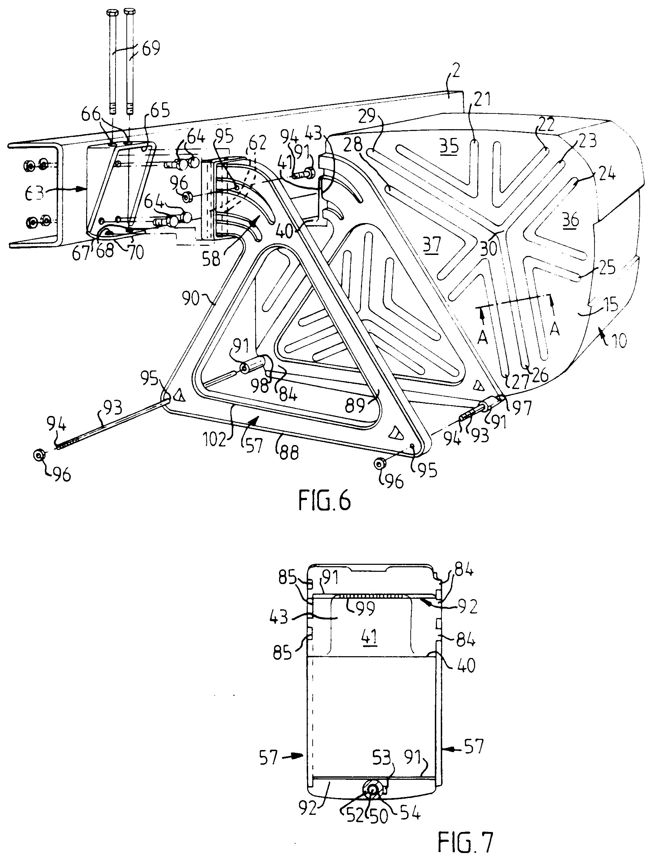

The top and bottom of tanks 9-12 are advantageously but not necessarily flat, whilst their ends 15-20 shown in Figure 3 are profiled for reinforcement and to counteract deflection when fuel pressure acts inside tank 9-12. The profiling at each end 15-20 is designed as a number of continuous grooves 21-29 which are most clearly shown in Figure 6. As shown in Figure 5, which shows a section along A-A in Figure 6, each groove 21-29 has an arc-shaped concave bottom. The groove as a depth D which is less than or equal to twice the radius of curvature R of the arc-shaped bottom. In an advantageous embodiment the ratio H/R is within the interval 1 and 2, but preferably approximately 1.4.

In an advantageous embodiment of reinforcing grooves 21-29, three grooves 23, 26, 29 together radiate to a point 30 and form a y-shape, which demarcates three sections 35, 36, 37, as shown, for example, in Figure 6. In each section 35, 36, 37 at least one, but in this embodiment two angular grooves 21, 22 and 24, 25 and 27, 28 respectively. In this case the angular grooves have their apex facing point 30.

As shown in Figure 4, the sides of the respective tanks 9-12 facing the frame are designed at the top with an essentially horizontal surface 40, which is designed to rest against the bottom of side member 2, and an essentially vertical surface 41, which is designed to rest against the side facing outwards, and a recess 42 for fastening mechanisms secured to the frame for fuel tank package 8 and fastenings for a possible attachment, such as a loading platform, cabinet or the like. Figures 6 and 7 show a second embodiment with an essentially horizontal surface 40, which is designed to rest against the bottom of side member 2, and an essentially vertical surface 41, which is intended to rest against the outward facing side of side member 2. Vertical surface 41 constitutes part of a supporting lip 43 which is shaped into tank 9-12 and which only extends over part of the width of tank 9-12. As shown in Figure 3, together with side member 2 lip 43 demarcates recesses 44 for fastening mechanisms secured to the frame for fuel tank package 8 and recess 45 for fastenings for attachments. Figure 3 only shows recesses 44, 45 in a tank 10, but recesses 44, 45 are found in each tank 9-12 in this embodiment. Depending on the vehicle type and equipment, etc., recesses 44, 45 can of course be designed in a number of different ways, and it is not always necessary, for example, to design recesses 45 for fastenings for attachments because this is not required on all types of vehicles.

The outwardly facing side of the tank may be flat, but as shown in Figure 3, for example, it is possible to design the side with a stiffening recess 47, e.g. for fixing the vertical position in so-called lateral shields which, on certain vehicles extend along its longitudinal side. Other designs for other purposes are of course possible.

Figure 7 shows that each tank 9-12 is designed in its rear lower section with a fuel outlet 50. The respective fuel outlets 50 are designed to be connected to each other to enable fuel pumped into a tank 9-12 to flow across to the other tanks 9-12. As shown in Figure 3 this enables only one tank 12 to be designed with recesses for tank cover 51 and a tank fitting not described in greater detail.

In an advantageous embodiment each tank 9-12 is designed with a fuel outlet 50 in the form of a tubular mechanism projecting from tank 9-12, which mechanism is designed to receive a pipe, a hose 52 or the like to connect tanks 9-12 to each other. In the solution described a hose 52 is used which is threaded on to fuel outlet 50 and fixed relative to it with a fastening mechanism 53 which presses hose 52 tightly against outlet 50. Fuel outlet 50 may consist of a separate unit which is secured to tank unit 9-12, but in an advantageous embodiment forms an integral part of tank 9-12, and is internally reinforced with a rigid, tubular mechanism 54, which constitutes a counterstop when slang 52 is pressed against the fuel outlet. In an advantageous embodiment fastening mechanism 53 consists of a hose clip, and the rigid tubular mechanism 54 of an aluminium tube.

It has previously been mentioned that from the point of view of standardisation it is advantageous for all tanks 9-12 to have the same shape and volume. To achieve this it is possible to prepare each tank 9-12 in a fuel tank package 8, with recesses for components such as tank cover 51 and tank fittings, but only to fit these components to a tank 9-12 and seal the recesses in all the other tanks 9-12 with covers. It is also possible, when manufacturing tanks 9-12, to design them with a wall section for fuel outlet 50. If only one tank 9-12 is installed in the vehicle, the wall section is allowed to remain, but if several tanks 9-12 are installed next to each other the wall sections of the respective tanks 9-12 are removed by means of a cutting tool. By giving tanks 9-12 identical designs considerable standardisation advantages are achieved which justify the cost of a cover and any cutting machining in tanks 9-12 during assembly.

Each tank 9-12, which of course constitutes an inert unit in fuel tank package 8, rests at each end 15, 20 against a suspension mechanism 57 (Figs. 3, 6, 7) for mountable fastening of tank 9-12 to side member 2 of the vehicle.

For the sake of simplicity the figures only show one suspension mechanism 57, namely the mechanism between tanks 9 and 10 shown in Figure 1. In this case it is assumed that the description below only applies to the other suspension mechanisms 57 and tanks 9-12.

Suspension mechanism 57 is designed with an end section 58 for connection to side member 2, e.g. by means of a bolted joint. In the embodiment which is shown most clearly in Figure 6, end section 58 of suspension mechanism 57 is designed as a female section with essentially parallel and essentially vertically extending holes 62, and is intended to project into a suspension mechanism 63, designed as a male section and secured to side member 2 by means of a screwed connection 64, for example. Suspension mechanism 63 comprises an upper essentially horizontal surface 65 with holes 66, and a lower slightly downwardly directed surface 67, with corresponding holes 68. In the fitted condition, shown in Figure 3, end section 58 of suspension mechanism 57 is inserted in suspension mechanism 63, holes 66 in upper surface 65, holes 62 in end section 58 and holes 68 in lower surface 67 being located opposite each other and receiving securing mechanisms 69, whose axial position is fixed by means of locking mechanism 70. In this embodiment fastening mechanisms 69 consist of bolts which extent in a vertical plane through holes 66, 61, 68, and locking mechanisms 70 consist of nuts 70, which are rigidly arranged, e.g. welded, close to holes 68 in lower surface 67. Since fastening mechanisms 69 extend in a vertical plane, and are also assembled from above, the assembly of the respective suspension mechanisms 47 on side member 2 is facilitated. Assembly is also facilitated by the fact that the lower slightly downwardly directed surface 67 extends the opening in suspension mechanism 63, allowing simple insertion of male section 58 into female section 63.

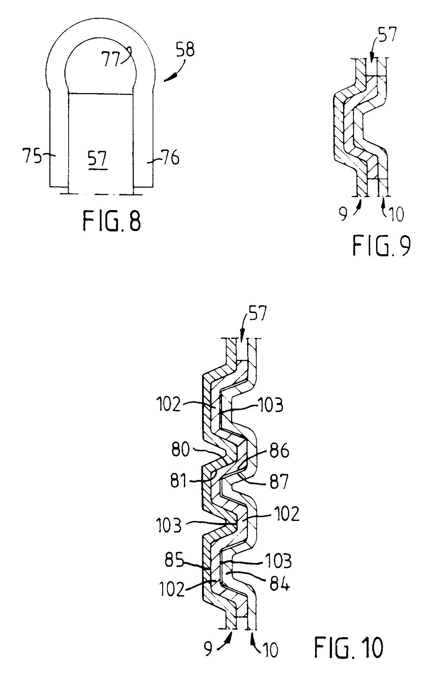

As shown in Figure 6, end section 50 and suspension mechanism 63, now described, are designed to receive two fastening mechanisms 69, arranged next to each other, and are therefore relatively wide and require correspondingly wide recesses 44 in the respective tanks 9-12. In order to be able to design narrower recesses 44 in tanks 9-12, it is possible to design end section 58 of suspension mechanism 57 with a profile which is shown in elevation in Figure 8. The figure shows that end section 58 is designed as a U-section with legs 75, 76, which are rigidly connected to suspension mechanism 57. The web of the U-section, which is designed to be inserted in a relatively narrow suspension mechanism 63 on side member 2, in principle in the same way as end section 58 in Figure 3, is designed with a rounded contour 77 to receive only one fastening mechanism 69, such as a bolt or the like, for fixing the position of suspension mechanism 57 i relation to suspension mechanism 63.

It is evident from figures 9 and 10, which show sections along B-B and C-C respectively, in Figure 3, when tanks 9 and 10 are installed next to each other, as shown in Figure 2, that each suspension mechanism 57 is designed not only with end section 58 but also with at least one first supporting face 80 which, because of displacement towards first tank 9, interacts with corresponding supporting face 81 in tank 9, and is designed with at least one second supporting face 87 in the other tank 10. Suspension mechanism 57 at the backward facing end of rear tank 9 (Fig. 2), suspension mechanisms 57 between tanks 10, 11 and tanks 11, 12 respectively (Fig. 3), and suspension mechanism 57 at the front end of front tank 12 (Fig. 2), are also designed with at least one first supporting face 80 and at least one second supporting face 86, both of which are intended to interact with corresponding supporting faces in their respective tanks. This provides a modular system in which the total size of the fuel space can very easily be varied by a suitable choice of the number of tanks 9-12.

Each tank in the modular system has two ends. As shown in Figures 6 and 7, for example, one end is designed with projection 84, whilst the other end, which is shown in Figures 4 and 7, is designed with recesses 85. In this case both ends have in principle the same shape, besides the fact that the raised area at one end corresponds to a countersunk area at the other end.

In an advantageous embodiment suspension mechanism 57 is designed with at least one projection 102, whose corresponding side has the shape of a recess 103. Projections 102 are designed to slide into corresponding recesses 85 in the end of first tank 9, whilst recesses 103 are designed to receive corresponding projections 84 in the end of second tank 10. Projection 102 on suspension mechanism 57 and corresponding recess 85 in tank 9, and also recess 103 in suspension mechanism 57 and corresponding projection 84 in tank 10, are in this case designed with the aforementioned supporting faces 80, 81.

In a further advantageous embodiment both the projections and the recesses in both tanks 9-12 and suspension mechanisms 57 have a conical cross-sectional shape, which means that supporting faces 80, 81 and 86, 87 respectively are somewhat inclined relative to an horizontal plane. This facilitates assembly of the tanks and suspension mechanisms together.

Suspension mechanism 57 may be designed in a number of different ways without losing the basic concept of the invention. For example, it may be manufactured from a square or rectangular plate with projections 102 and recesses 103, or from more or less continuous beams, struts, round bars or the like, which can of course extend in different directions in a vertical plane between two tanks, or at the end of a tank package. By using a folded or profiled plate or the like it is possible to make the suspension mechanism relatively thin, whilst retaining strength and rigidity. Tests have shown that it is possible to manufacture the suspension mechanism from a plate only 2-3 thick, for example, and still achieve good strength and rigidity. It is therefore possible to position a number of tanks so close together that they form a fuel tank package which to an observer appears to be a one single, continuous fuel tank.

In the advantageous embodiment shown in the figures suspension mechanism 57 is manufactured as a pressed plate bracket of triangular shape. As shown in Figure 6, suspension mechanism 57 is designed with an essentially horizontal base section 88, which extends in the transverse direction of the vehicle from the lower rear edge of tank 10 to the lower front edge of tank 10, where it connects to a strut 89, extending diagonally across the end of tank 10, which strut forms part of or is connected to the aforementioned end section 58, which is connected to side member 2. In this case strut 89 stiffens the ends of tanks 9, 10 and limits their deflection when it is influenced by fuel pressure. Base section 88 of suspension mechanism 57 is connected on the lower rear edge of tank 10 to a strut 90, extending obliquely towards the top of tank 10, which strut is also connected to or forms part of the aforementioned end section 58. Both base section 88 and struts 89, 90 are in this case designed on one of their sides with continuous projections 102 and on their other sides with corresponding recesses 103, which projections 102 and recesses 103 extend in a triangular shape. Both projections 102 and recesses 103 are in this case designed with the aforementioned supporting faces 80, 86.

To ensure that supporting faces 86, 86 of suspension mechanisms 57 and supporting faces 81, 87 of the corresponding tanks 9-12 rest against and interact with each other under all operating conditions of the vehicle, at least one, but in this example three fastening mechanisms 92 extend between suspension mechanisms 57.

As shown in Figures 6 and 7, each fastening mechanism 92 consists of tubular spacer mechanisms 91, which extend essentially horizontally and in the longitudinal direction of the vehicle between each suspension mechanism 57 in fuel tank package 8. Tubular spacer mechanisms 91 are in this case slightly shorter than the respective tanks 9-12. A continuous mechanism 93, whose one end section 94 (Fig. 3) extends through a hole 95 in suspension mechanism 57, at one end of fuel tank package 8, and which extends through holes in the other suspension mechanisms 57 and is secured to the other end of fuel tank package 8, passes through the spacer mechanisms.

In this embodiment continuous mechanism 93 consists of a threaded rod which is connected at the respective ends to locking mechanisms 96, e.g. nuts. In this case the nuts are tightened so that the respective suspension mechanisms 57 are pressed against the ends of spacer mechanisms 91, thereby providing an arrangement which ensures that the profiled structure of suspension mechanisms 57 and the profiled structure of corresponding tanks 9-12 are permanently pressed against each other, providing good solidarity of the units.

Figures 6 and 7 show that tubular spacer mechanisms 91 rest against supporting faces 97, 98, 99 in the respective tanks 9-12. A first supporting face 97 is in this case arranged on the outer lower section of the respective tanks 9-12, so that together with a second supporting face 98 on the lower inner section of tank 9-12 and a third supporting face 99 countersunk in lip 43, on the upper inner section of tank 9-12, it fixes the position of tank 9-12 relative to side member 2.

With the invention described it is possible to use the space which is available for fuel tanks on a vehicle as effectively as possible, but at the same enabling the customer to compose a tank volume which is suitable for him. This is possible because the tanks can be likened to building blocks which can be connected to each other with intervening suspension mechanisms. A suspension mechanism between two tanks can be made relatively thin, and because the supporting faces interact, and extend into each other, so to speak, it is possible to fit the ends of two tanks tightly against each other. With this modular system it is therefore possible to fill the entire available length between the wheel axles with tanks which are positioned so closely together that they form a fuel tank package which, to an observer, appear to be a single continuous fuel tank. The invention enables the requirements of the customers to be easily met in terms of fuel volume because it is very simple to dismantle superfluous tanks or connect additional tanks to the tank package.

The description has so far concentrated on fuel tank arrangements which are based on a modular concept, in which the available fuel space is formed by a number of relatively small tanks which can be connected to each other, and in which the total size of the fuel space can be varied by a suitable choice of the number of tanks. By designing the tank arrangement as a modular system, effective use is made of the available length between the wheel axles. Because the respective tanks are also supported by suspension mechanisms at their ends, the available cross-section is also effectively used because the space saving brackets shown in Figure 1, which reduce the volume, are avoided.

The modular system described is certainly highly advantageous, but this invention concept may also be used if the advantages of the modular system are not required, but only one tank is required to be connected to the frame to make more effective use of the available cross-section. For it is possible, within this invention concept, to design suspension mechanisms 57 with at least one supporting face (80) which, due to displacement towards a fuel tank (9), interacts with corresponding supporting face (81) at the end of tank (9). In such a design both ends of a tank can be designed identically, either with projections (84) or with recesses (85). If tank (9) is designed with projections (84), suspension device (57) is designed with recesses (103) into which projections (84) are designed to slide. On the other hand, if tank 99) is designed with recesses (85), suspension mechanisms (57) is designed with projections (102) which are designed to slide into recesses (85). Both projections (84, 102) and recesses (85, 103) have, advantageously, a conical cross-sectional shape.

In an advantageous embodiment suspension mechanism (57) is designed with continuous projections (102) which extend in a triangular shape, or with continuous recesses (103) which extend in a triangular shape and incorporate the previously described fastening mechanisms (92).

With the embodiment last described a flexible arrangement is obtained which is simple and rational to install and enables the cross-section available for fuel to be used as effectively as possible.

The description given certainly shows a highly advantageous embodiment, but despite this the invention must not be limited to this embodiment but can be modified into a number of alternative embodiments within the framework of the following claims.

## Claims

1. Fuel tank arrangement for motor vehicles, particularly heavy vehicles with at least one fuel tank which extends along a vehicle frame (1) between wheel axles (6, 7) secured to it, and which is connected to the vehicle frame (1) by at least one suspension mechanism (57), characterised in that the suspension mechanism ((57) is designed with at least a first supporting face (8) which, as a result of displacement towards a first fuel tank (9), interacts with a corresponding first supporting face (81) in the tank (9), and is designed with at least a second supporting face (86) intended to interact with a corresponding second supporting face (87) in a second fuel tank 10), which second fuel tank (10) is in turn designed to be connected, via suspension mechanism (57) and supporting faces (80, 81, 86, 87), to a third fuel tank (11) and so on, the total size of the fuel space being varied by suitable selection of the number of fuel tanks (9-12).

2. Fuel tank arrangement according to claim 1, characterised in that each fuel tank (9-12) is designed with two ends, the first supporting face (81) of the tank being incorporated at one end, whilst its other supporting face (87) is incorporated at the other end.

3. Fuel tank arrangement according to claim 2, characterised in that one end of the fuel tank (9-12) is designed with at least one projection (84), whilst other end is designed with at least one recess (85), the first supporting face (81) being incorporated in the recess (85), whilst the second supporting face (87) is incorporated on the projection (84).

4. Fuel tank arrangement according to claim 1, characterised in that the suspension mechanism (57) is designed with at least projection (102) and at least one recess 103), the first supporting face (80) of the suspension mechanism (57) being incorporated on the projection (102), whilst its second supporting face (86) is incorporated in the recess (103).

5. Fuel tank arrangement according to claims 3 and 4, characterised in that the projection (102) of the suspension mechanism (57) is designed to slide into a corresponding recess (85) in the end of the first bank (9), whilst its recess is designed to receive a corresponding projection (84) in the end of the second tank (10), the supporting faces (80, 81) of the suspension mechanism) being brought into contact with the supporting faces (81, 87) of the respective tanks (9, 10).

6. Fuel tank arrangement according to claim 5, characterised in that both the projections (84) and the recesses (85) in the tank (9-12), and also the projections (102) and recesses (103) in the suspension mechanism (9(57), have a conical cross-sectional shape.

7. Fuel tank arrangement according to claim 4, characterised in that the suspension mechanism (57) consists of a pressed plate bracket, one side of which is designed with continuous projections (1020) extending in a triangular shape, and the other side of which is designed corresponding continuous recesses (103).

8. Fuel tank arrangement according to claims 1 characterised in that at least one fastening mechanism (92) is arranged to press the supporting surfaces (80, 81 and 86, 87 respectively) together.

9. Fuel tank arrangement according to claim 8 characterised in that the fastening mechanism (92) incorporates at least one tubular spacer mechanism (91), which extends in the longitudinal direction of the vehicle between two suspension mechanisms (57), and a continuous mechanism (92), which extends through the spacer mechanism (91) and whose end sections (94) are each connected to their own suspension mechanism (57), in that the spacer mechanism (91) is slightly shorter, in the longitudinal direction of the vehicle, that the respective fuel tanks (9-12), and in that locking mechanisms (96) are arranged on the continuous mechanism (92) for pressing the suspension mechanisms against the spacer mechanism, the supporting faces also being pressed together.

## Patentansprüche

1. Kraftstofftankanordnung für Kraftfahrzeuge, insbesondere Schwerfahrzeuge, mit mindestens einem Kraftstofftank, der sich entlang einem Fahrzeugrahmen (1) zwischen daran befestigten Radachsen (6, 7) erstreckt und der mit dem Fahrzeugrahmen (1) durch mindestens eine Aufhängungsvorrichtung (57) verbunden ist, dadurch gekennzeichnet, daß die Aufhängungsvorrichtung (57) mit mindestens einer ersten Haltefläche (8) gestaltet ist, die als Folge einer Verschiebung auf einen ersten Kraftstofftank (9) zu mit einer entsprechenden ersten Haltefläche (81) an dem Tank (9) zusammenwirkt, und mit mindestens einer zweiten Haltefläche (86) gestaltet ist, die dazu gedacht ist, mit einer entsprechenden zweiten Haltefläche (87) an einem zweiten Kraftstofftank (10) zusammenzuwirken, welcher zweite Kraftstofftank (10) wiederum gestaltet ist, um über eine Aufhängungsvorrichtung (57) und Halteflächen (80, 81, 86, 87) mit einem dritten Kraftstofftank (11) verbunden zu werden, usw., wobei die Gesamtgröße des Füllraums für Kraftstoff durch eine geeignete Auswahl der Anzahl von Kraftstofftanks (9-12) geändert werden kann.

2. Kraftstofftankanordnung nach Anspruch 1, dadurch gekennzeichnet, daß jeder Kraftstofftank (9-12) mit zwei Enden gestaltet ist, wobei die erste Haltefläche (81) des Tanks an einem Ende ausgebildet ist, während dessen andere Haltefläche (87) an dem anderen Ende ausgebildet ist.

3. Kraftstofftankanordnung nach Anspruch 2, dadurch gekennzeichnet, daß ein Ende des Kraftstofftanks (9-12) mit mindestens einem Vorsprung (84) gestaltet ist, während ein anderes Ende mit mindestens einer Aussparung (85) gestaltet ist, wobei die erste Haltefläche (81) in der Aussparung (85) ausgebildet ist, während die zweite Haltefläche (87) auf dem Vorsprung (84) ausgebildet ist.

4. Kraftstofftankanordnung nach Anspruch 1, dadurch gekennzeichnet, daß die Aufhängungsvorrichtung (57) mit mindestens einem Vorsprung (102) und mindestens einer Aussparung (103) gestaltet ist, wobei die erste Haltefläche (80) der Aufhängungsvorrichtung (57) auf dem Vorsprung (102) ausgebildet ist, während deren zweite Haltefläche (86) in der Aussparung (103) ausgebildet ist.

5. Kraftstofftankanordnung nach den Ansprüchen 3 und 4, dadurch gekennzeichnet, daß der Vorsprung (102) der Aufhängungsvorrichtung (57) gestaltet ist, um in eine entsprechende Aussparung (85) in dem Ende des ersten Tanks (9) zu gleiten, während deren Aussparung gestaltet ist, um einen entsprechenden Vorsprung (84) in dem Ende des zweiten Tanks (10) aufzunehmen, wobei die Halteflächen (80, 81) der Aufhängungsvorrichtung mit den Halteflächen (81, 87) der jeweiligen Tanks (9, 10) in Anlage gebracht werden.

6. Kraftstofftankanordnung nach Anspruch 5, dadurch gekennzeichnet, daß sowohl die Vorsprünge (84) als auch die Aussparungen (85) in dem Tank (9-12) und auch die Vorsprünge (102) und Aussparungen (103) in der Aufhängungsvorrichtung (57) eine kegelförmige Querschnittsform haben.

7. Kraftstofftankanordnung nach Anspruch 4, dadurch gekennzeichnet, daß die Aufhängungsvorrichtung (57) aus einem gepreßten Plattenträger besteht, dessen eine Seite mit durchgehenden, sich in dreieckiger Form erstreckenden Vorsprüngen (102) gestaltet ist und dessen andere Seite mit entsprechenden durchgehenden Aussparungen (103) gestaltet ist.

8. Kraftstofftankanordnung nach Anspruch 1, dadurch gekennzeichnet, daß mindestens eine Befestigungsvorrichtung (92) eingerichtet ist, um die Halteoberflächen (80, 81 bzw. 87, 87) zusammenzudrücken.

9. Kraftstofftankanordnung nach Anspruch 8, dadurch gekennzeichnet, daß die Befestigungsvorrichtung (92) mindestens eine röhrenförmige Abstandshaltervorrichtung (91), die sich in der Längsrichtung des Fahrzeugs zwischen zwei Aufhängungsvorrichtungen (57) erstreckt, und eine durchgehende Vorrichtung (92) enthält, die sich durch die Abstandshaltervorrichtung (91) erstreckt und deren Endteile (94) jeweils mit ihrer eigenen Aufhängungsvorrichtung (57) verbunden sind, dadurch, daß die Abstandshaltervorrichtung (91) in der Längsrichtung des Fahrzeugs etwas kürzer als die jeweiligen Kraftstofftanks (9-12) ist, und dadurch, daß Verriegelungsvorrichtungen (96) an der durchgehenden Vorrichtung (92) angeordnet sind, um die Aufhängungsvorrichtung an die Abstandshaltervorrichtung anzudrücken, wobei auch die Halteflächen zusammengedrückt werden.

## Revendications

1. Agencement de réservoir de carburant pour des véhicules automobiles, en particulier des véhicules lourds ayant au moins un réservoir de carburant qui s'étend le long d'un châssis de véhicule (1), entre des essieux de roues (6, 7) fixés à ce dernier, et qui est connecté au châssis de véhicule (1) par au moins un mécanisme de suspension (57), caractérisé en ce que le mécanisme de suspension (57) est pourvu d'au moins une première face de support (80) qui, suite à un déplacement vers un premier réservoir de carburant (9), coopère avec une première face de support (81) correspondante dans le réservoir (9), et est pourvu d'au moins une deuxième face de support (86) destinée à coopérer avec une deuxième face de support (87) correspondante dans un deuxième réservoir de carburant (10), le deuxième réservoir de carburant (10) étant à son tour conçu pour être connecté, via le mécanisme de suspension (57) et les faces de support (80, 81, 86, 87), à un troisième réservoir de carburant (11), et ainsi de suite, la dimension totale de l'espace de réservoir étant modifiée par une sélection appropriée du nombre de réservoirs de carburant (9 à 12).

2. Agencement de réservoir de carburant selon la revendication 1, caractérisé en ce que chaque réservoir de carburant (9 à 12) est pourvu de deux extrémités, la première face de support (81) du réservoir étant incorporée sur une extrémité, tandis que son autre face de support (87) est incorporée sur l'autre extrémité.

3. Agencement de réservoir de carburant selon la revendication 2, caractérisé en ce qu'une extrémité du réservoir de carburant (9 à 12) est pourvue d'au moins une saillie (84), tandis que l'autre extrémité est pourvue d'au moins une cavité (85), la première face de support (81) étant incorporée dans la cavité (85), tandis que la deuxième face de support (87) est incorporée sur la saillie (84).

4. Agencement de réservoir de carburant selon la revendication 1, caractérisé en ce que le mécanisme de suspension (57) est pourvu d'au moins une saillie (102) et d'au moins une cavité (103), la première face de support (80) du mécanisme de suspension (57) étant incorporée sur la saillie (102), tandis que sa deuxième face de support (86) est incorporée dans la cavité (103).

5. Agencement de réservoir de carburant selon les revendications 3 et 4, caractérisé en ce que la saillie (102) du mécanisme de suspension (57) est conçue pour coulisser dans une cavité (85) correspondante, ménagée dans l'extrémité du premier réservoir (9), tandis que sa cavité est conçue pour loger une saillie (84) correspondante, dans l'extrémité du deuxième réservoir (10), les faces de support (80, 81) du mécanisme de suspension étant amenées en contact avec les faces de support (81, 87) des réservoirs (9, 10) respectifs.

6. Agencement de réservoir de carburant selon la revendication 5, caractérisé en ce qu'à la fois les saillies (84) et les cavités (85) prévues dans le réservoir (9 à 12), et également les saillies (102) et les cavités (103) prévues dans le mécanisme de suspension (57) présentent une forme de section transversale conique.

7. Agencement de réservoir de carburant selon la revendication 4, caractérisé en ce que le mécanisme de suspension (57) consiste en un support plat embouti, dont un côté est pourvu de saillies (102) continues s'étendant sous une forme triangulaire, et dont l'autre côté est pourvu de cavités (103) continues correspondantes.

8. Agencement de réservoir de carburant selon la revendication 1, caractérisé en ce qu'au moins un mécanisme de fixation (92) est agencé pour presser ensemble les surfaces de support (80, 81 et 86, 87 respectivement).

9. Agencement de réservoir de carburant selon la revendication 8, caractérisé en ce que le mécanisme de fixation (92) incorpore au moins un mécanisme d'espacement (91) tubulaire, s'étendant dans la direction longitudinale du véhicule entre deux mécanismes de suspension (57), et un mécanisme continu (92) qui traverse le mécanisme d'espacement (91) et dont les sections d'extrémité (94) sont chacune connectées à leur propre mécanisme de suspension (57), en ce que le mécanisme d'espacement (91) est légèrement plus court, dans la direction longitudinale du véhicule, que les réservoirs de carburant (9 à 12) respectifs, et en ce que des mécanismes de verrouillage (96) sont agencés sur le mécanisme continu (92) pour presser les mécanismes de suspension contre le mécanisme d'espacement, les faces de support étant également pressées ensemble.
